# EUROPEAN PATENT APPLICATION

(11) **EP 2 581 168 A1**
(43) Date of publication of application: **17.04.2013**
(21) Application number: 11184975.8
(22) Date of filing: 13.10.2011
(51) Int. Cl.: B24B 55/00, B25F 5/00, B25D 11/00

(54) **Handheld machine**

(71) Applicant: OY KWH MIRKA AB, 66850 Jeppo (FI)
(72) Inventor: Nordström, Caj, 66850 Jeppo (FI)
(74) Representative: Niemi, Hakan Henrik

(57) **Abstract**

A handheld machine, comprising a housing and a printed circuit board (110) within the housing (104, 106, 108) for controlling the operation of the machine. The handheld machine (100) comprises an acceleration sensor (112), which is arranged onto the printed circuit board (110) of the machine (100).

## Description

### FIELD

The invention relates to a handheld machine, such as a sander, a polisher, an angle grinder or a drilling machine for instance.

### BACKGROUND

Nailing machines, and other corresponding hand-held machines that cause impulses to the user's hand, are easily understandable to be a potential health risk for the user.

However, when working with some other hand-held machines, such as sanders, the exposure to health hazards, is not so apparent. The long-term exposure to low level vibration may, however, be as detrimental to the user's health, such as blood vessels, nerves and joints, as momentary high impulses.

Some attempts have been done to measure the vibration of the working machine. However, such devices are either difficult to construct, inaccurate in their measurements, or may have detrimental effects on the working comfort.

### SUMMARY

An object of the invention is to alleviate the above disadvantages. This is achieved with the invention defined in the independent claim. Some embodiments are disclosed in the dependent claims.

### DRAWINGS

The invention will now be explained in more detail referring to the accompanying drawings, wherein
Figure 1 highlights the use of a sander with one hand;
Figure 2 highlights the use of a sander with both hands;
Figure 3 shows a sander with the handle part opened; and
Figure 4 shows a schematic structure of a printed circuit board for a sander.

### DESCRIPTION OF SOME EMBODIMENTS

The following embodiments relate to powered handheld machines/tools, such as grinding, sanding or polishing machines.

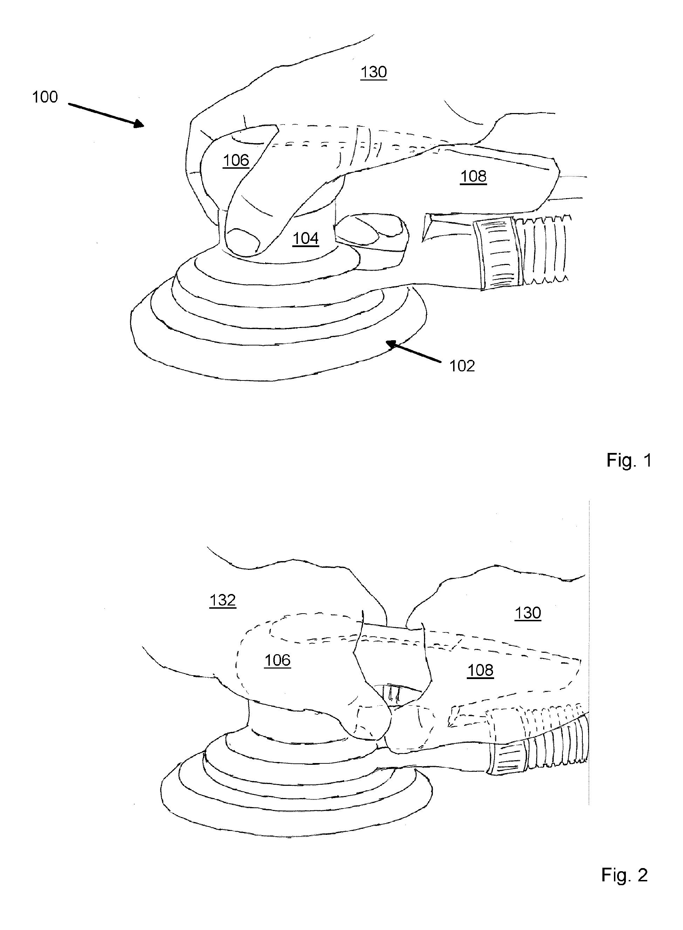

Figures 1 and 2 show examples of use of a sander with one hand (Figure 1, 130) and two hands (Figure 2, 130, 132). The exemplary sander has, as a tool, a rotary and/or oscillating circular sanding disk 102, to which abrasive material can be attached. The rotary and/or oscillating motion of the tool is provided by a motor arranged in the motor housing 104. Instead of a circular working tool shown in Figures 1 and 2, the tool can alternatively have other forms, such as triangular, square or rectangular.

Above the motor housing 104 there is provided a grip 106, which is specially adapted to be gripped with one hand. The grip may be round and sized such that when the palm of the hand rests against the top surface of the grip, the fingers set around the grip 106.

As can be seen, the grip 106 is positioned substantially above the tool 102. In one embodiment, the grip is centrally positioned with respect to the tool. That is, the middle axis of the round grip coincides with the middle axis of the disc and the motor. In this way, the device is optimized for one-hand use, because a pressing force exerted by the user on the grip delivers the same pressing force on the tool 102 via the rigid motor housing 104. In another embodiment, the mutual positioning of the grip 106 and the disk 102 may be slightly eccentric.

The exemplary sanding machine of Figures 1 and 2 also contains a second grip 108 for providing support for a second hand of a user. The second grip may be an elongated grip, and formed such that the user may set the palm of the hand against the top surface of the grip 108. The thumb of the hand then sets on one side of the grip 108, and the other fingers on the other side of the grip.

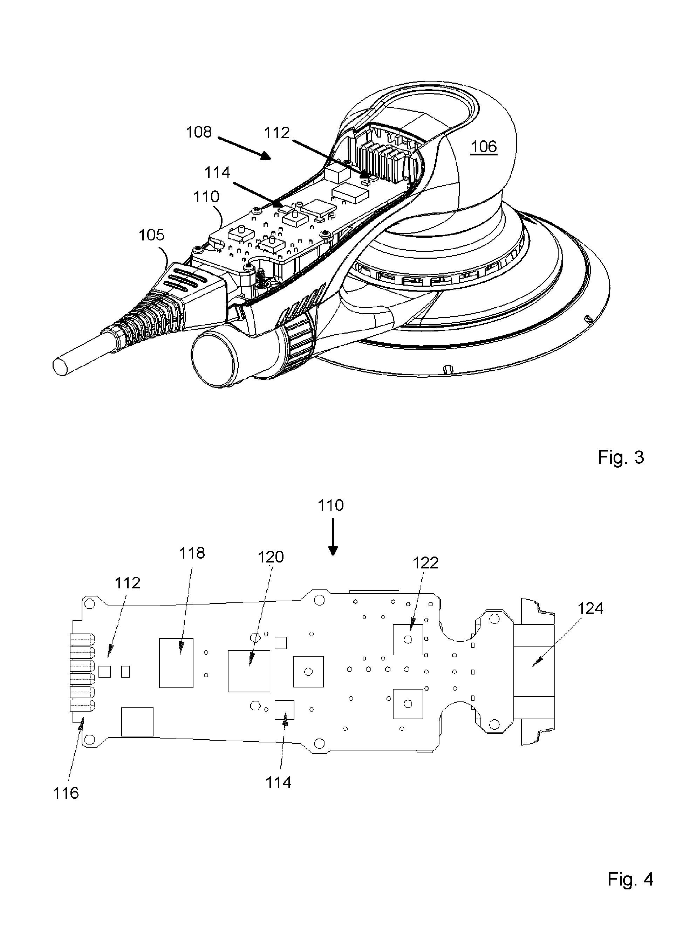

Figure 3 shows an embodiment of a sander, in which the second handle portion 108 is shown without the outer covering such that the inner structure is visible.

Within the handle portion 108, between the electrical connection 105 and the first handle 106, there is provided a printed circuit board (PCB) for controlling the operations of the machine. The PCB 110 is populated with electrical components and includes also the processor of the machine.

The PCB 110 is shaped such that it fits within the elongated second grip 108. The PCB may be encapsulated with plastic such as to improve the shock-resistance of the board.

On the PCB, there are provided one or more acceleration sensors 112 for measuring accelerations during the working sessions. The acceleration sensor may be a three-dimension (3D) sensor but may alternatively be a 1 D or a 2D sensor. The sensor may also be capable of measuring horizontal and/or vertical rotation acceleration.

Figure 3 shows an embodiment of the positioning of the acceleration sensor. In this embodiment, the acceleration sensor 112 is positioned at the end of the PCB 110 close to the first grip 106. When this positioning is compared to Figure 1, it can be seen that the acceleration sensor lies just under the palm of the first hand 130 of the user. As to the two-hand mode of the Figure 2, the acceleration sensor's position is optimally between the two hands. By the way of this positioning, the sensor is capable of optimally providing working safety to a user in both operation modes.

In the embodiment of Figure 3, an additional sensor could be placed to the other end of the PCB than the sensor 112. Or, at least, optimally, there should be at least a couple (2 cm) of centimeter's distance between the sensors. Advantageously the sensors are placed substantially onto the middle axis, that is, the symmetry axis, of the handgrip/machine, whereby the vibration data provided by them is directly comparable. The data provided by the two or more sensors may be treated separately, or combined to give an overview of the dynamics of the overall vibration of the machine.

On the PCB 110, there is also provided a communication module 114, which can be a Bluetooth communication module, for instance. Other known forms of communication can as well be applied.

Figure 4 shows one embodiment of the structure of the PCB. On the left, there are wire terminals 116 for connecting the PCB to the motor of the device. The other end of the PCB provides an electrical connector 124 for connecting the device to a power input.

Similarly as in Figure 3, the acceleration sensor 112 is positioned in the close proximity of the wire terminals 116 of the PCB. In the embodiment of Figure 4, the processor/controller 120 is positioned substantially in the middle of the PCB. The processor may include a memory section storing software code for running the operations of the processor. Alternatively, or in addition to, the PCB may also comprise a separate memory module. Data, such as data collected by the acceleration sensor may be stored on the memory of the processor and/or the separate memory module. Alternatively, also the acceleration sensor may comprise a memory for storing data measured by it.

To minimize the length of the connecting lines, the communication module 114 may be positioned as close as possible to the processor. Figure 4 also shows a transistor driver 118 and buttons 122 of the PCB.

In an embodiment, the acceleration sensor may provide a momentary acceleration value, which may be evaluated per acceleration direction. For instance, in a 3D acceleration sensor, the x-, y-, and z-directions are evaluated separately. The respective individual acceleration values may be compared to a respective threshold value, and a warning may be given if the threshold value is exceeded. The threshold values of the different acceleration directions may be the same, or may differ from each other. For instance, more acceleration may be tolerated in x-, and y-directions than the z-direction.

In another embodiment, a sum vector is formed from the different axial acceleration values. The length of the sum vector and/or the direction of the vector may be taken into account when comparing the vector to its threshold settings to determine whether the momentary vibration level complies with a secure vibration level. The calculation of the sum vector may be carried out in the acceleration sensor, or in the processor operatively coupled to the acceleration sensor.

In another embodiment, cumulative vibration dosage over a working session may be estimated. The cumulative dosage may be estimated either real-time, or after the working session. If the dosage is estimated real-time, a warning may be given to the user if/when the dosage reaches a threshold setting of the cumulative dosage.

The vibration data during a working session may be stored to a memory of the sensor, the processor, the PCB or an external device. The memory may be capable of storing data from the previous 12 hours, for instance. The stored data may comprise, for instance, one or more of the following: a time stamp for each data record, an acceleration data of a linear acceleration value, a sum vector of two or more linear acceleration sensors and/or one or more rotation acceleration sensors, a cumulative vibration value, a rotating speed of the tool and an identifier of a user using the machine.

The communication unit may send data measured and/or stored in the device to outside of the machine. The communication unit may apply Bluetooth, radio frequency transmission, wired transmission, or some other known transmission method when transmitting the data. Vibration data may be sent online during the working session, or after the working session has been completed. The data may be sent to an external computer connected to the machine.

The communication unit may also be capable of receiving data from an external device. Same communication methods may be applied in receiving data as when transmitting it. The received data may include, for instance, an instruction to take a sensor to use, a threshold setting for a linear acceleration sensor, a threshold setting for a rotation sensor, a threshold setting for a vector formed by summing measurement values of one or more linear acceleration sensors and/or rotation sensors and user identification. In an embodiment, the thresholds are set based on who is using the machine.

Initially, the device may be provided with a plurality of acceleration sensors that are provided on the PCB. When the sensors are provided on the PCB already at the manufacturing phase of the machine, the number of sensor and their positioning can be optimally planned.

The sensors may be provided with a plurality of the capabilities. For instance, each sensor may comprise x-, y-, z-, and rotation sensors. Initially, at least some of the sensors may not even be set to be operating. The user may then be provided with a possibility to upload to the machine an instruction to activate those sensors that he/she wishes. The user may also be provided with a possibility to activate only a subset of features provided in each sensor. For instance, the user may wish to activate only x-sensors on each sensor and keep y- and z-sensors deactivated.

This solution allows the user to effectively interact with the machine and modify its operation such that it best fits the individual's needs. The cooperation of the acceleration sensors and the communication link providing a bidirectional communication, allow the user to modify the hand-held tool where the acceleration sensors are integrally formed part of the machine's inner structure and are not readily accessible.

The machine may comprise an indicating unit for indicating various vibration values and/or giving warnings during the working session when needed. Indications may be given to the user via a display on the body of the machine, and/or by giving a sound warning. Referring to Figure 2, the visual display might be positioned to the area that is between the hands 130, 132. The visual display may use colors, for instance, to indicate acceptable or non-acceptable working levels. If the working level is acceptable, that is, the momentary and/or cumulative dosages are below the respective threshold levels, the display may use green color. Yellow may indicate that the working level is near to an unacceptable level, and red may indicate that a threshold setting has been exceeded. In an embodiment, the machine may even stop and prevent working if the daily cumulative dosage has been exceeded.

The collection and analysis of data may have the important task of improving working safety. Continuously too high momentary or cumulative threshold values may indicate, for instance, that the user is depressing the machine against the working surface too much. Other indications may also be derived, such as whether the tool applied in the working machine may be too coarse, or whether that the rotating speed applied in the work is appropriate. Data may also indicate that, at certain rotating speed values of the tool, one or more vibration values rapidly increase. This phenomenon may be due to a resonance between the two. Based on this analysis, the user may be guided to avoid certain rotating speeds, or the machine may even be instructed to do so. Analysis of the collected data may also be useful in evaluation the condition of the machine. Exceptionally high vibration values may also be an indication of that the machine is broken or that the tool is broken or mounted in a wrong way. Analysis of the collected data may be also performed by a supervisor of the user. Based on the collected data, the supervisor can also see the start and end moments of the work session, and the breaks held by user.

There may be provided a computer, which is operatively coupled to the handheld working machine. The computer may be applied in vibration data analysis collected from the machine and/or provision of input data to be fed to the machine. The data analysis may be carried out by using visual graphs presented for a user, or to his/her supervisor and a software package may be provided on the computer to perform the analysis.

Some embodiments have been presented above. The embodiments provide several advantages.

Positioning of the acceleration sensor directly on the PCB is a simple solution and provides advantages in mass production. That is, when the machine after all includes a PCB, it is advantageous to utilize the available space therein for accommodating also the acceleration sensor. There is thus no need to seek a position/room for the sensor elsewhere within the housing of the device.

Furthermore, when the acceleration sensor is provided directly on the PCB, the communication between the sensor and the processor can be arranged optimally. If the sensor is arranged somewhere else in the housing of the device, the wiring between the sensor and the processor affects the whole design of the device.

Furthermore, when the acceleration sensor is encapsulated into the housing of the machine, the sensor is well protected from external shocks.

Furthermore, when the acceleration sensor is provided on the machine's PCB, no extra power feeding for the acceleration sensor is needed. Battery-operated acceleration sensors have the risk of running out of power, thereby endangering the safety of the user.

When the acceleration sensor is fixedly arranged to the PCB of the machine, all users will automatically be subject to the vibration measurement based security functions of the machine.

Collection and utilization of vibration data is especially advantageous in oscillating sanders, which are often used during long and continuous working sessions. The dangers associated with working with a sander are thereby more associated with the length of the working session and the cumulative vibration dosage thereof in contrast to some other machines where the dangers associated to the working are immediately apparent due to high momentary impulses, for instance.

Collection of the vibration data may easily also reveal incorrect assembly of a work tool. A warning of exceptionally high vibration values may be given such that the user may correct the assembly.

The collected vibration data may also be applied to balance the machine. In an embodiment, the machine may comprise physical positions where the user may add weights to, or remove weights from. The vibration data may directly indicate to the user how he should balance the machine by using the weights. Alternatively, the machine may comprise electrically controllable balancing units. The processor may then automatically balance the machine during operation based on the vibration data collected from the sensor(s).

In the above embodiments, division of functionality between the acceleration sensor(s), processor, the communication module, and an external computer can be distributed/divided in various ways. For instance, a memory for storing the vibration data may be arranged in any of these modules. Furthermore, the calculation of a cumulative vibration value, for instance, may be performed in any of the acceleration sensor, the processor or the externally connected computer. As a further example of the various implementation possibilities, data may be directly conveyed from the acceleration sensor to the communication module, or data may be first conveyed to the processor, and therefrom to the communication unit.

The first and/or second electronic device may comprise a processor, which can be a general-purpose processor configured to execute a computer program tangibly recorded on a non-transitory computer-readable recording medium, such as a ROM, hard disk drive, optical memory or flash memory. In this case, the general-purpose processor can be configured to carry out the operative functions described herein by executing the computer program recorded on the non-transitory computer-readable recording medium. In accordance with an exemplary embodiment, the processor can be an application-specific processor that is specifically configured to carry out the operative functions described herein. The non-transitory computer-readable recording medium can be memory-resident and/or communicatively connected to the respective electronic device.

It will be obvious to a person skilled in the art that, as the technology advances, the inventive concept can be implemented in various ways. The invention and its embodiments are not limited to the examples described above but may vary within the scope of the claims.

## Claims

1. A handheld machine, comprising a housing and a printed circuit board (110) within the housing (104, 106, 108) for controlling the operation of the machine, **characterized in that** the handheld machine (100) comprises an acceleration sensor (112), which is arranged onto the printed circuit board (110) of the machine (100).

2. A handheld machine according to claim 1, **characterized in that** the housing comprises a grip (108) for receiving a hand (130, 132) of the user, and the printed circuit board (110) is positioned within the grip (108).

3. A handheld machine according to any preceding claim, **characterized in that** the acceleration sensor (112) is positioned on the printed circuit board (108) to a position, where it lies under a palm of the hand (130) when the machine is operated in one-hand mode, and between the hands (130, 132) when the machine (100) is operated in a two-hand mode.

4. A handheld machine according to any preceding claim, **characterized in that** the housing comprises an elongated grip (108) for receiving a hand of a user, wherein a first end of the elongated grip (108) faces a motor housing (104) of the machine (100), and the acceleration sensor (112) is arranged onto the printed circuit board (110) at the end of the elongated grip (108) that faces the motor housing (104).

5. A handheld machine according to any preceding claim, **characterized in that** the printed circuit board (110) comprises at least two sensors that are arranged substantially on the symmetry axis of the machine (110), wherein the distance between the sensors is at least 2 cm.

6. A handheld machine according to any preceding claim, **characterized in that** the machine (100) comprises a communication module (114) for communicating data between the handheld machine (100) and an external apparatus.

7. A handheld machine according to any preceding claim, **characterized in that** the communication module (114) is configured to receive an instruction for activation and/or deactivation of one or more features of a sensor (112).

8. A handheld machine according to any preceding claim, **characterized in that** the communication module (114) is configured to receive a threshold setting for an acceleration value measured by the acceleration sensor (112) and/or a user parameter.

9. A handheld machine according to any preceding claim, **characterized in that** the communication module (114) is positioned in an immediate proximity of a processor (120) of the machine.

10. A handheld machine according to any preceding claim, **characterized in that** the sensor (112) is programmable without opening the housing of the machine.

11. A handheld machine according to any preceding claim, **characterized in that** the handheld machine (100) comprises an indication module for giving to a user of the machine an indication of a of a momentary and/or cumulative acceleration value.

12. A handheld machine according to any preceding claim, **characterized in that** the indication module is configured to give to the user a warning if a momentary and/or a cumulative acceleration value exceeds a predetermined threshold value.

13. A handheld machine according to any preceding claim, **characterized in that** the handheld machine (100) comprises a control unit (120) for estimating a cumulative vibration dosage during a working session and preventing a use of the machine (100) if the dosage is exceeded.

14. A handheld machine according to any preceding claim, **characterized in that** the control unit (120) is configured to detect vibration values associated with different rotation speeds of a tool of the machine (100).

15. A handheld machine according to any preceding claim, **characterized in that** the control unit (120) is configured to prevent use of a rotating speed of a tool (102) that causes vibration values over a predetermined threshold value.
